# FASCICULE DE BREVET EUROPEEN

(11) **EP 2 551 481 B1**
(45) Date de publication et mention de la délivrance du brevet: **05.08.2015**
(21) Numéro de dépôt: 12172128.6
(22) Date de dépôt: 15.06.2012
(51) Int. Cl.: F01N 3/20

(54) **Ensemble de traitement des gaz d'echappement d'un moteur à combustion comportant une boîte d'introduction et de prémélange d'un fluide**
Anordnung zur Aufbereitung der Abgase eines Verbrennungsmotors, die ein Einführungs- und Vormischungsgehäuse für eine Flüssigkeit umfasst
Assembly for treating exhaust gas from a combustion engine comprising a housing for injecting and pre-mixing a fluid

(30) Priorité: 26.07.2011 FR 1156798
(43) Date de publication de la demande: 30.01.2013
(73) Titulaire: PEUGEOT CITROËN AUTOMOBILES SA, 78140 Velizy-Villacoublay (FR)
(72) Inventeur: Chapel, Julien, 77380 Combs la Ville (FR); Ferrand, Nicolas, 78500 Sartrouville (FR); Lere, Sylvain, 75018 Paris (FR)

(56) Documents cités:
- EP-A1- 1 947 307
- FR-A1- 2 859 239
- JP-A- 2003 013 730

## Description

L'invention porte sur le domaine des moyens de traitement des polluants des gaz d'échappement des moteurs à combustion.

Les émissions polluantes des moteurs à combustion équipant les véhicules automobiles sont réglementées par des normes de plus en plus sévères. Les polluants réglementés sont - selon la technologie de moteur à combustion considérée - le monoxyde de carbone (CO), les hydrocarbures imbrûlés (HC), les oxydes d'azotes (NOₓ), et les particules.

Il est connu d'employer un certain nombre de moyens de dépollution dans la ligne d'échappement des moteurs à combustion pour en limiter les émissions de polluants réglementés. Par exemple, un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On connait également des moyens spécifiques au traitement des oxydes d'azote ou NOx, tels que les pièges à NOₓ ou les catalyseurs dits SCR pour « sélective catalytic réduction ». Cette dernière technologie consiste à réduire les NOₓ par introduction d'un agent réducteur (ou d'un précurseur d'un tel agent réducteur) dans les gaz d'échappement. On parlera dans la suite du présent document d'une manière générale de « réducteur » pour désigner un agent réducteur ou un précurseur d'agent réducteur. L'agent réducteur généré permet de réduire les oxydes d'azotes par réaction dans un catalyseur SCR, c'est-à-dire un substrat portant une imprégnation catalytique apte à favoriser la réduction des NOₓ par l'agent réducteur.

On désigne de manière générale ces dispositifs par le terme de moyens de « post-traitement » des gaz d'échappement.

Dans un véhicule automobile présentant l'architecture la plus commune, c'est à dire avec un moteur dans un volume sous capot à l'avant du véhicule, les différents dispositifs de post-traitement sont généralement implantés sous le plancher du véhicule, dans un « tunnel » formé par ce plancher (on parle de manière équivalente d'une disposition « sous caisse »), ou répartis pour partie dans le compartiment moteur (volume sous capot) qui accueille le catalyseur d'oxydation et pour partie sous caisse, où sont disposés les autres dispositifs (catalyseur SCR, filtre à particules, etc.).

On connait néanmoins de la demande de brevet français déposée sous le numéro FR 1050453 l'intérêt de positionner un maximum des dispositifs de post-traitement des gaz d'échappement dans l'espace sous capot moteur. En effet, outre un gain de place dans l'espace sous-caisse du véhicule, un tel positionnement des catalyseurs (d'oxydation et/ou SCR) et/ou du filtre à particules permet de les rapprocher au maximum de la sortie du moteur, et donc de profiter de conditions thermiques favorables notamment à leur montée en température et à leur activation (passage au dessus d'une température nécessaire à une bonne efficacité de traitement). Ainsi, un tel positionnement engendre un cycle vertueux dans la conception de l'ensemble de traitement des gaz d'échappement : les éléments du dispositif de post-traitement, en étant disposés à proximité de la sortie des chambres de combustion du moteur (sous capot et non sous caisse), jouissent de conditions thermiques favorables à un fonctionnement optimal, ce qui permet d'en réduire la taille pour obtenir une même efficacité de traitement, comparé à un dispositif implanté sous caisse. On gagne ainsi encore plus en compacité, et en outre, réduisant la taille des éléments de dépollution, on en diminue l'inertie thermique ce qui accélère encore plus leur montée en température.

En vue d'optimiser la fonctionnalité et l'implantation dans l'espace sous capot moteur d'un ensemble compact de traitement des gaz d'échappement, il a été proposé par la demanderesse au travers de la demande de brevet français déposés sous les numéros FR1151374 (demande non publiée à ce jour) un ensemble de traitement des gaz d'échappement compacts regroupant selon une architecture en « U » un catalyseur d'oxydation, et un catalyseur SCR (pouvant être un filtre à particules portant d'une imprégnation catalytique pour la réduction des oxydes d'azote).

Dans le cadre de cette architecture, il est prévu que le catalyseur d'oxydation soit placé dans la première branche du « U », tandis que le catalyseur SCR est positionné dans la seconde branche du « U ».

Dans ce cadre, l'introduction d'un réducteur doit donc être réalisée entre le catalyseur d'oxydation et le catalyseur SCR, par exemple entre les deux branches du « U ». L'implantation des moyens d'introduction du réducteur dans le conduit d'échappement, typiquement un injecteur, n'est pas aisée du fait de la configuration géométrique et de l'extrême compacité du système.

L'objet de l'invention est donc de proposer un ensemble de dépollution des gaz d'échappement présentant une architecture générale en « U », optimisé quant à la fonction d'introduction d'un fluide dans l'ensemble. L'invention permet notamment l'optimisation de l'introduction d'un fluide pour la réduction catalytique sélective des oxydes d'azote, avec un réducteur liquide ou gazeux.

Plus précisément, l'invention porte donc sur un ensemble de traitement des gaz d'échappement d'un moteur à combustion, comportant une première branche et une seconde branche sensiblement parallèles et destinées à recevoir des monolithes de traitement des gaz d'échappement, lesdites branches étant reliées par un raccord fluidique de sorte que la première branche, la seconde branche et le raccord sont agencés sensiblement en « U », et qui comporte en outre :
- une boîte positionnée entre les deux branches, et présentant un piquage d'entrée dans la première branche, et un piquage de sortie dans la seconde branche ;
- des moyens d'introduction d'un fluide débouchant dans ladite boîte.

De préférence, la première branche comportant un catalyseur d'oxydation, dans lequel le piquage d'entrée est positionné en aval du catalyseur d'oxydation.

De préférence, le piquage de sortie est positionné directement en amont d'un catalyseur SCR.

De préférence, la boîte est mécaniquement liée à la première branche et à la seconde branche, de sorte à éviter leur écartement sous contrainte.

De préférence, des moyens de captation sont positionnés en entrée du piquage d'entrée dans la boîte, de sorte à capter une part d'un flux gazeux circulant dans l'ensemble et à orienter cette part de flux vers l'intérieur de la boîte via le piquage d'entrée.

De préférence, des moyens de diffusion sont positionnés en sortie du piquage de sortie de sorte à diriger les gaz sortant de la boîte dans une direction donnée.

De préférence, les moyens d'introduction comportent un injecteur.

De préférence, la boîte comporte un mélangeur en regard des moyens d'introduction d'un fluide.

De préférence, la boîte comporte une ou plusieurs cloisons internes définissant un cheminement des gaz entre le piquage d'entrée et le piquage de sortie.

L'invention porte aussi sur un véhicule automobile comportant un espace sous-capot et un ensemble conforme à l'invention dans ledit espace sous-capot.

Dans un tel véhicule, l'ensemble est préférentiellement fixé entre un moteur à combustion et un tablier séparant l'espace sous-capot d'un habitacle du véhicule.

L'invention est décrite plus en détail ci-après et en référence aux figures représentant schématiquement le système dans son mode de réalisation préférentiel.

La figure 1 présente schématiquement selon un premier point de vue (vue « de face ») un ensemble selon l'invention selon un mode de réalisation préférentiel.

La figure 2 présente schématiquement selon un second point de vue (vue « de côté », selon le plan de coupe A-A représenté en figure 1) un ensemble selon l'invention selon le même mode de réalisation préférentiel, dans son environnement immédiat.

La figure 3 présente un ensemble selon l'invention dans lequel on a détaillé un premier mode de réalisation de la boîte d'introduction de fluide employée dans l'invention.

La figure 4 présente un ensemble selon l'invention dans lequel on a détaillé un second mode de réalisation de la boîte d'introduction de fluide employée dans l'invention.

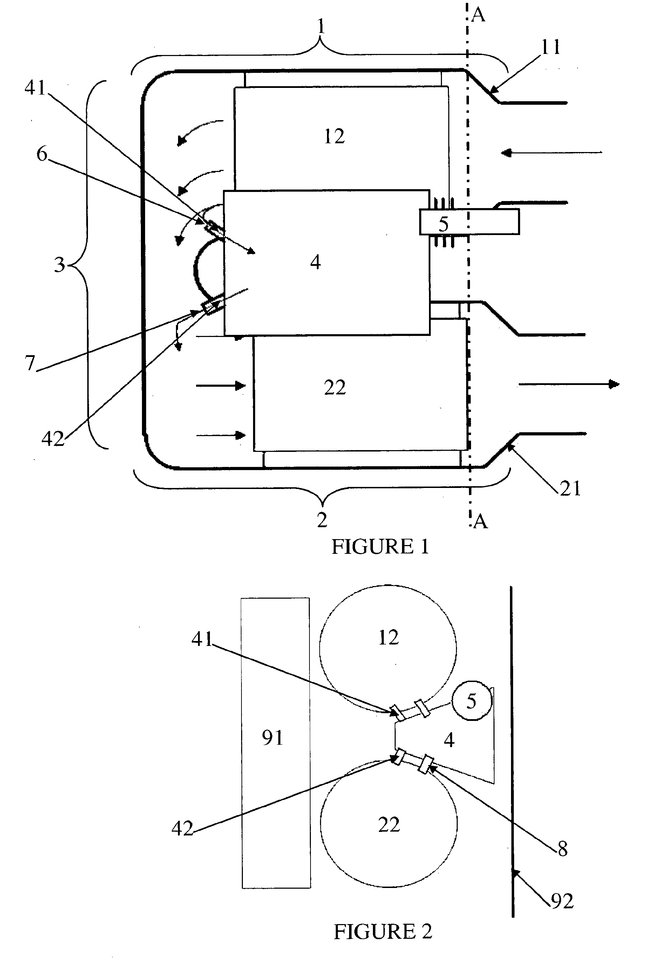

Sur la figure 1, un ensemble selon un mode de réalisation préféré de l'invention présente une enveloppe (souvent désignée par le terme anglophone de « canning »), comportant une première branche rectiligne 1 et une seconde branche rectiligne 2, la première branche 1 et la seconde branche 1 étant sensiblement parallèles l'une par rapport à l'autre. La première branche 1 et la seconde branche 2 sont destinées à accueillir des pains ou monolithes de traitement des gaz d'échappement prismatiques droits, généralement cylindriques. Les monolithes peuvent notamment être :
- un catalyseur d'oxydation, pour le traitement des hydrocarbures imbrûlés (HC) et du monoxyde de carbone (CO) ;
- un catalyseur de réduction catalytique sélective des oxydes d'azote, pour le traitement des oxydes d'azote (NOₓ) ;
- un filtre à particules, pour le piégeage et éventuellement l'oxydation des particules de suie ;
- un filtre à particules portant une imprégnation de réduction catalytique sélective des oxydes d'azote, combinant ainsi les fonctions de filtre à particules et de catalyseur de réduction catalytique sélective des oxydes d'azote.

Typiquement, la première branche 1 peut contenir un catalyseur d'oxydation, et la seconde branche 2 peut contenir un catalyseur SCR (pouvant être un filtre à particules portant une imprégnation de réduction catalytique sélective des oxydes d'azote).

La première branche comporte un divergent d'entrée 11.

La seconde branche comporte un convergent de sortie 21.

La première et la seconde branche sont reliées par un raccord 3 fluidique, de sorte que la première branche 1, la seconde branche 2 et le raccord sont agencés selon une forme sensiblement en U (sans qu'il y ait nécessairement égalité entre la longueur de la première branche 1 et la longueur de la seconde branche 2).

Dans l'invention, une boîte 4 est positionnée entre la première branche 1 et la seconde branche 2. La boîte 4 est destinée à réaliser l'introduction et à assurer un pré-mélange d'un fluide dans les gaz d'échappement. Typiquement, un injecteur 5 permet l'introduction d'un réducteur SCR (ou d'un précurseur d'un tel réducteur), par exemple une solution d'urée liquide ou de l'ammoniac gazeux, dans le volume de la boîte 4.

La boîte présente un piquage d'entrée 41 permettant la communication entre la première branche 1 et l'intérieur de la boîte 4. La boîte 4 présente également un piquage de sortie 42 permettant la communication entre l'intérieur de la boîte 4 et la seconde branche 2. Dans la variante préférentielle de l'invention ici représentée, le piquage d'entrée 41 est positionné en aval d'un catalyseur d'oxydation 12 présent dans la première branche 1, et le piquage de sortie est positionné en amont d'un catalyseur SCR 22 (pouvant être un filtre à particules portant une imprégnation catalytique SCR) présent dans la seconde branche 2.

Le principe de fonctionnement mis en jeu dans l'invention est le suivant : une partie du flux des gaz d'échappement issue du catalyseur d'oxydation 12 est prélevée et s'introduite dans la boîte 4, dans laquelle un réducteur SCR, typiquement de l'urée, est injecté. Dans cette boîte 4, s'effectue d'une part la décomposition de l'urée en NH3 gazeux et d'autre part un pré-mélange des gaz d'échappement (les gaz d'échappement introduits dans la boîte 4). Ce mélange est ensuite renvoyé à dans la seconde branche 2, à l'entrée de cette dernière, en amont du catalyseur SCR afin de finaliser le post-traitement des gaz d'échappement.

Afin de favoriser l'entrée de gaz d'échappement dans la boîte 4 des moyens de captation 6 sont positionnés en entrée du piquage d'entrée 41. Il peut notamment s'agir d'ailettes correctement orientées, de lamelles, ou encore d'une portion de tube dont l'entrée fait face à la direction des gaz d'échappement dans cette zone.

De manière analogue, des moyens de diffusion 7 peuvent être positionnés en sortie du piquage de sortie, afin de diriger les gaz sortant de la boîte de mélange dans une direction appropriée. Il peut notamment s'agir d'ailettes correctement orientées, de lamelles, ou encore d'une portion de tube dont la sortie est orientée dans la direction souhaitée. Ainsi, il est notamment possible d'orienter les gaz sortant de la boîte 4 de sorte à favoriser leur mélange dans le flux principal des gaz d'échappement, et d'éviter que le mélange réalisé dans la boîte 4 n'atteigne le catalyseur SCR avant de se mêler au reste des gaz d'échappement.

De manière optionnelle, des clapets anti-retour peuvent être installés à l'entrée et/ou à la sortie de la boîte 4.

La figure 2 est une vue schématique du dispositif représenté en figure 1 dans son environnement, selon le plan de coupe A-A noté en figure 1. Tel que présenté sur cette figure, la boîte 4 est au moins en partie imbriquée dans l'espace formé entre les deux branches.

Par ailleurs, dans la variante préférentielle de l'invention ici représentée, la boîte 4 est liée rigidement à la première branche 1 et à la seconde branche 2 par des supports 8. La boîte 4 ainsi liée renforce l'ensemble, et évite notamment l'écartement des branches l'une par rapport à l'autre.

Dans l'application à un véhicule automobile ici représentée, l'ensemble est disposé entre le moteur 91 dont il traite les gaz d'échappement, et un tablier 92 qui sépare l'espace sous-capot, dans lequel sont disposés le moteur et l'ensemble de traitement des gaz d'échappement, d'un habitacle du véhicule automobile.

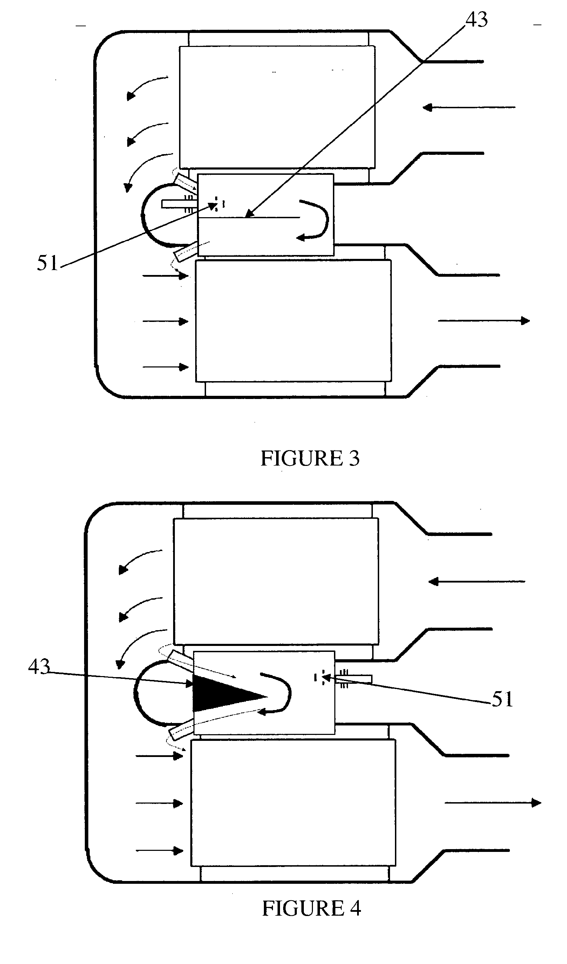

La figure 3 présente un ensemble selon l'invention dans lequel on a détaillé un premier mode de réalisation de la boîte d'introduction de fluide employée dans l'invention.

Plus précisément, la boîte 4 y comporte une cloison 43 longitudinale interne qui augmente le parcours des gaz entre l'entrée et la sortie de la boîte 4. La cloison 43 permet de séparer le flux entrant du flux sortant, obligeant les gaz d'échappement à circuler sur une distance importante (typiquement de l'ordre de 20cm à 40cm). L'injecteur 5 est positionné en entrée de la boîte 4. Ainsi, le fluide introduit disposera d'un maximum de temps et de distance pour se mêler à la part des gaz d'échappement passant dans la boîte 4.

Un mélangeur 51 peut être disposé en mélangeur en regard de l'injecteur 5. Le mélangeur 51 peut être d'un type tendant à générer des turbulences aérauliques dans la boîte 4. Dans le cadre de l'injection d'un réducteur liquide, le mélangeur peut aussi être constitué d'un ou plusieurs impacteurs qui sont des pièces sur lesquelles le ou les jets de l'injecteur sont projetés, afin d'éclater et pulvériser les jets de réducteur.

La figure 4 présente un ensemble selon l'invention dans lequel on a détaillé un second mode de réalisation de la boîte d'introduction de fluide employée dans l'invention.

Dans le mode de réalisation présenté en figure 4, l'injecteur 5 est positionné pour injecter dans la boîte 4 à l'opposé du piquage d'entrée 41. Dans la variante ici représentée, un mélangeur 51 est disposé en regard de l'injecteur 5. La cloison 43 présente une forme adaptée pour guider le flux gazeux circulant dans la boîte 4 de sorte à ce qu'il tangente l'embouchure de l'injecteur 5. La cloison 43, ici présentée d'un seul tenant, pourrait de manière équivalente être constituée de deux cloisons.

D'autres parcours du flux gazeux dans la boîte 4 peuvent être envisagés, notamment pour augmenter la distance parcourue par les gaz dans la boîte 4, après introduction du fluide, en modifiant la forme de la (ou des) paroi 43, ou en augmentant le nombre de parois mises en jeu.

L'invention ainsi développée présente de multiples avantages, dont les principaux sont ci-après énumérés.

Par un positionnement de la boîte d'introduction et de prémélange entre les deux enveloppes, et cela notamment dans le cadre d'un positionnement dans un véhicule automobile dans un espace sous-capot avant, entre le moteur et l'habitacle du véhicule, l'injection de fluide est réalisée dans des conditions thermiques très favorables au bon mélange du fluide (ambiance chaude).

Le positionnement de la boîte d'introduction et de prémélange du fluide permet l'emploi d'un volume jusqu'alors inutilisé.

L'invention est compatible tant d'une application de réduction catalytique sélective des oxydes d'azote par introduction d'un réducteur liquide que d'une application par introduction d'un réducteur gazeux.

Le dispositif développé permet de s'affranchir de la problématique de la contre pression généralement générée par un mélangeur interposé dans une ligne d'échappement d'un moteur à combustion. En effet, un prémélange étant réalisé dans une petite partie du flux des gaz d'échappement, il est possible d'employer dans la boîte de prémélange un mélangeur ou un système d'impaction très efficace (mais générant une forte perte de charge) sans générer de perte de charge dans le flux principal des gaz.

Dans une variante dans laquelle la boîte d'introduction et de prémélange assure une liaison mécanique entre les deux branches du « U », la fiabilité mécanique de l'ensemble est renforcée. En particulier, toute ouverture par écartement des branches de l'ensemble en « U » est empêchée.

## Revendications

1. Ensemble de traitement des gaz d'échappement d'un moteur à combustion, comportant une première branche (1) et une seconde branche (2) sensiblement parallèles et destinées à recevoir des monolithes de traitement des gaz d'échappement, lesdites branches (1,2) étant reliées par un raccord (3) fluidique de sorte que la première branche (1), la seconde branche (2) et le raccord (3) sont agencés sensiblement en « U », **caractérisé en ce qu'**il comporte en outre :
- une boîte (4) positionnée entre les deux branches (1,2), et présentant un piquage d'entrée (41) dans la première branche (1), et un piquage de sortie (42) dans la seconde branche (2) ;
- des moyens d'introduction (5) d'un fluide débouchant dans ladite boîte (4).

2. Ensemble selon la revendication 1, la première branche (1) comportant un catalyseur d'oxydation (12), dans lequel le piquage d'entrée (41) est positionné en aval du catalyseur d'oxydation (12).

3. Ensemble selon la revendication 1 ou la revendication 2, dans lequel le piquage de sortie (42) est positionné directement en amont d'un catalyseur SCR (22).

4. Ensemble selon l'une des revendications précédente, dans lequel la boîte (4) est mécaniquement liée à la première branche (1) et à la seconde branche (2), de sorte à éviter leur écartement sous contrainte.

5. Ensemble selon l'une quelconque des revendications précédentes, dans lequel des moyens de captation (6) sont positionnés en entrée du piquage d'entrée (41) dans la boîte (4), de sorte à capter une part d'un flux gazeux circulant dans l'ensemble et à orienter cette part de flux vers l'intérieur de la boîte (4) via le piquage d'entrée (41).

6. Ensemble selon l'une quelconque des revendications précédentes, dans lequel des moyens de diffusion (7) sont positionnés en sortie du piquage de sortie (42) de sorte à diriger les gaz sortant de la boîte (4) dans une direction donnée.

7. Ensemble selon l'une quelconque de revendications précédentes, dans lequel les moyens d'introduction comportent un injecteur (5).

8. Ensemble selon l'une quelconque des revendications précédentes, dans lequel la boîte comporte un mélangeur (51) en regard des moyens d'introduction (5) d'un fluide.

9. Ensemble selon l'une quelconque des revendications précédentes, dans lequel la boîte (4) comporte une ou plusieurs cloisons internes (43) définissant un cheminement des gaz entre le piquage d'entrée (41) et le piquage de sortie (42).

10. Véhicule automobile comportant un espace sous-capot et un ensemble selon l'une quelconque des revendications précédentes dans ledit espace sous-capot.

11. Véhicule automobile selon la revendication 10, l'ensemble étant fixé entre un moteur à combustion (91) et un tablier (92) séparant l'espace sous-capot d'un habitacle du véhicule.

## Patentansprüche

1. Anordnung zur Aufbereitung der Abgase eines Verbrennungsmotors, die einen ersten Zweig (1) und einen zweiten Zweig (2) umfasst, die im Wesentlichen parallel und dazu bestimmt sind, Aufbereitungsmonolithe der Abgase aufzunehmen, wobei die Zweige (1, 2) durch eine Fluidverbindung (3) derart verbunden sind, dass der erste Zweig (1), der zweite Zweig (2) und der Anschluss (3) im Wesentlichen in "U"-Form angeordnet sind, **dadurch gekennzeichnet, dass** sie ferner Folgendes umfasst:
- ein Gehäuse (4), das zwischen den zwei Zweigen (1, 2) positioniert ist und eine Eingangsabzweigung (41) in dem ersten Zweig (1) und eine Ausgangsabzweigung (42) in dem zweiten Zweig (2) aufweist,
- Mittel (5) zum Einführen eines Fluids, die in das Gehäuse (4) münden.

2. Anordnung nach Anspruch 1, wobei der erste Zweig (1) einen Oxidationskatalysator (12) umfasst, in dem die Eingangsabzweigung (41) stromabwärts des Oxidationskatalysators (12) positioniert ist.

3. Anordnung nach Anspruch 1 oder 2, bei der die Ausgangsabzweigung (42) direkt stromaufwärts eines SCR-Katalysators (22) positioniert ist.

4. Anordnung nach einem der vorhergehenden Ansprüche, bei der das Gehäuse (4) mechanisch mit dem ersten Zweig (1) und mit dem zweiten Zweig (2) derart verbunden ist, dass ihr Abspreizen unter Belastung vermieden wird.

5. Anordnung nach einem der vorhergehenden Ansprüche, bei der Auffangmittel (6) am Eingang der Eingangsabzweigung (41) in dem Gehäuse (4) derart positioniert sind, dass ein Teil eines Gasstroms, der in der Anordnung zirkuliert, aufgefangen wird, und dieser Stromteil zum Inneren des Gehäuses (4) über die Eingangsabzweigung (41) ausgerichtet wird.

6. Anordnung nach einem der vorhergehenden Ansprüche, bei der Diffusionsmittel (7) am Ausgang der Ausgangsabzweigung (42) derart angeordnet sind, dass die Gase, die aus dem Gehäuse (4) austreten, in eine gegebene Richtung gelenkt werden.

7. Anordnung nach einem der vorhergehenden Ansprüche, bei der die Einführungsmittel einen Einspritzer (5) umfassen.

8. Anordnung nach einem der vorhergehenden Ansprüche, bei der das Gehäuse einen Mischer (51) gegenüber den Mitteln (5) zum Einführen eines Fluid umfasst.

9. Anordnung nach einem der vorhergehenden Ansprüche, bei der das Gehäuse (4) eine oder mehrere Innenwände (43) umfasst, die einen Gasverlauf zwischen der Eingangsabzweigung (41) und der Ausgangsabzweigung (42) definieren.

10. Kraftfahrzeug, das unter der Motorhaube einen Raum und eine Anordnung nach einem der vorhergehenden Ansprüche in dem Raum unter der Motorhaube umfasst.

11. Kraftfahrzeug nach Anspruch 10, wobei die Einheit zwischen einem Verbrennungsmotor (91) und einer Schürze (92), die den Raum unter der Motorhaube von einer Fahrgastzelle des Fahrzeugs trennt, befestigt ist.

## Claims

1. An assembly for treating the exhaust gases of an internal combustion engine, comprising a first branch (1) and a second branch (2) which are substantially parallel and intended to receive monoliths for the treatment of the exhaust gases, said branches (1, 2) being connected by a fluidic connector (3) such that the first branch (1), the second branch (2) and the connector (3) are arranged substantially in a "U" shape, **characterized in that** it further comprises:
- a box (4) positioned between the two branches (1, 2) and having an inlet tap(41) in the first branch (1), and an outlet tap (42) in the second branch (2);
- means (5) for introduction of a fluid opening into said box (4).

2. The assembly according to claim 1, the first branch (1) comprising an oxidizing catalyst (12), in which the inlet tap (41) is positioned downstream of the oxidizing catalyst (12).

3. The assembly according to claim 1 or 2, in which the outlet tap (42) is positioned directly upstream of an SCR catalyst (22).

4. The assembly according to one of the preceding claims, in which the box (4) is mechanically connected to the first branch (1) and to the second branch (2), so as to prevent their separation under stress.

5. The assembly according to any one of the preceding claims, in which pick-up means (6) are positioned at the inlet of the inlet tap (41) in the box (4), so as to pick up a portion of a gaseous flow circulating in the assembly and to direct this portion of flow towards the interior of the box (4) via the inlet tap (41).

6. The assembly according to any one of the preceding claims, in which diffusion means (7) are positioned at the outlet of the outlet tap (42) so as to direct the gases exiting the box (4) in a given direction.

7. The assembly according to any one of the preceding claims, in which the introduction means comprise an injector (5).

8. The assembly according to any one of the preceding claims, in which the box comprises a mixer (51) opposite the introduction means (5) of a fluid.

9. The assembly according to any one of the preceding claims, in which the box (4) comprises one or several internal partitions (43) defining a route of the gases between the inlet tap (41) and the outlet tap (42).

10. A motor vehicle comprising an under-bonnet space and an assembly according to any one of the preceding claims in said under-bonnet space.

11. The motor vehicle according to claim 10, the assembly being fixed between an internal combustion engine (91) and a panel (92) separating the under-bonnet space from a passenger compartment of the vehicle.
